# FASCICULE DE BREVET EUROPEEN

(11) **EP 2 852 956 B1**
(45) Date de publication et mention de la délivrance du brevet: **22.06.2016**
(21) Numéro de dépôt: 13724576.7
(22) Date de dépôt: 21.05.2013
(51) Int. Cl.: G21F 5/06, G21F 5/14, G21F 7/00, G21F 7/06, B65G 1/04

(54) **DISPOSITIF DE STOCKAGE**
SPEICHERVORRICHTUNG
STORAGE DEVICE

(30) Priorité: 22.05.2012 FR 1254664
(43) Date de publication de la demande: 01.04.2015
(73) Titulaire: AREVA NC, 92400 Courbevoie (FR)
(72) Inventeur: COLIN, Bruno, 84100 ORANGE (FR); COLLETTE, Luc, 84270 VEDENE (FR)
(74) Mandataire: Brevalex
(86) Numéro de dépôt international: PCT/EP2013/060391
(87) Numéro de publication internationale: WO 2013/174802

(56) Documents cités:
- FR-A- 1 465 775
- FR-A1- 2 694 122
- GB-A- 1 220 027
- US-A- 3 179 243
- US-A- 3 483 380

## Description

### DOMAINE TECHNIQUE ET ART ANTÉRIEUR

La présente invention se rapporte à un dispositif de stockage indexé en position permettant de stocker des objets délivrés en un ou plusieurs lieux donnés.

Ce dispositif de stockage peut être utilisé pour le stockage de têtes d'étuis et d'étuis vides utilisés pour le transport de matière destinée à la fabrication de combustible nucléaire.

Les matériaux entrant dans la fabrication du combustible nucléaire, par exemple de combustible MOX, sont pour certains transportés dans des boîtes fermées de manière étanche disposées à l'intérieur d'étuis eux-mêmes fermés de manière étanche.

Par exemple dans le cas de la fabrication du combustible MOX, l'oxyde de plutonium est récupéré après retraitement des combustibles usagés, et est stocké dans des boîtes métalliques fermées de manière étanche, ces boîtes étant empilées dans un étui également métallique et fermé de manière étanche. Ces étuis sont alors transportés de l'installation de retraitement du combustible nucléaire usé vers l'installation de fabrication du combustible MOX.

Lorsque cet étui arrive dans l'installation de fabrication du combustible MOX, celui-ci est ouvert et les boîtes d'oxyde de plutonium sont déchargées en vue de l'utilisation de l'oxyde de plutonium.

L'ouverture de l'étui et la manipulation des boîtes de plutonium se font dans une boîte à gants à l'aide de robots qui peuvent être commandés de l'extérieur de la boîte à gants.

L'ouverture de l'étui se fait par la découpe d'une de ses extrémités longitudinales désignée "tête", les boîtes peuvent alors être sorties de l'étui par exemple par gravité.

Les têtes ainsi découpées et les étuis vides doivent être récupérés et stockés pour ensuite être évacués de la boîte à gant en vue de leur traitement ultérieur.

Pour cela, un panier est prévu pour recevoir les têtes d'étui et un panier est prévu pour recevoir les étuis vides. Chaque panier est muni d'alvéoles d'axe vertical recevant chacun une tête d'étui ou un étui vide.

Les étuis sont manipulés par une roue mobile autour d'un axe horizontal. L'évacuation des têtes d'étui et des étuis vides vers les paniers s'effectue par gravité. Le point de chute des étuis et des têtes d'étui est invariable, ce sont alors les paniers qui pivotent autour d'un axe vertical pour présenter au niveau du point de chute une alvéole vide prête à recevoir un étui vide ou une tête d'étui.

Afin de faire pivoter le panier et positionner correctement une alvéole vide au niveau du point de chute, un actionneur, type moteur électrique associé à un codeur est utilisé pour assurer la rotation du panier d'un pas angulaire donné et pour connaître sa position angulaire.

D'une part, les codeurs sont susceptibles de connaître des pannes, ce qui peut être d'autant plus pénalisant lorsque le dispositif est confiné dans une boîte à gant difficile d'accès.

D'autre part, il s'agit d'un actionneur dédié uniquement au déplacement du panier. Il implique donc un certain coût et accroît l'encombrement de l'ensemble du système.

Le document FR2694122 décrit une enceinte de transport d'éléments irradiés comportant un carrousel muni des alvéoles pour loger les éléments irradiés. Le carrousel est déplacé en rotation en actionnant par des moyens de contrôle commande un motoréducteur. Le contrôle du déplacement angulaire du carrousel présente les inconvénients énoncés ci-dessus.

### EXPOSÉ DE L'INVENTION

C'est par conséquent un but de la présente invention d'offrir un dispositif de stockage d'objets indexé, par exemple d'étuis vides et de têtes d'étui, de conception simple et robuste.

Le but précédemment énoncé est atteint par un dispositif de stockage comportant un panier présentant un axe longitudinal et une pluralité d'alvéoles réparties autour de l'axe longitudinal, un passage s'étendant suivant l'axe longitudinal, ledit dispositif comportant également un support de panier muni d'un arbre d'indexation pénétrant dans le passage, et des moyens d'indexation angulaire du panier par rapport à l'arbre d'indexation, portés à la fois par le passage et l'arbre d'indexation, et activés par un déplacement relatif de l'arbre d'indexation et du passage le long de l'axe longitudinal.

De manière préférée, l'arbre d'indexation comporte sur sa périphérie latérale des cames et le passage comporte des galets coopérant avec les cames ; lorsque le panier s'écarte de l'arbre d'indexation le long de l'axe longitudinal, les galets circulent entre les cames suivant un premier chemin et lorsque le panier est rapproché de l'arbre d'indexation le long de l'axe longitudinal, les galets circulent entre les cames suivant un deuxième chemin de sorte que la position angulaire du panier a varié d'un pas donné par rapport à sa position avant le déplacement du panier le long de l'axe longitudinal.

Avantageusement, le déplacement du panier le long de l'axe longitudinal est obtenu au moyen d'un grappin qui vient saisir le panier au niveau de l'axe longitudinal. Ce grappin est avantageusement utilisé par ailleurs pour manipuler les objets destinés à être stockés dans le panier. Dans le cas d'étuis de transport de boîtes de matériaux destinés à la fabrication de combustible nucléaire, le grappin est également utilisé pour manipuler les étuis remplis en vue de leur découpe.

La présente invention a alors pour objet un dispositif de stockage indexé en position comportant un support et un panier monté sur le support, le panier comportant une pluralité d'alvéoles réparties autour d'un axe longitudinal, le panier comportant un passage central d'axe longitudinal, le support comportant un arbre d'axe longitudinal, l'arbre étant logé dans le passage de sorte qu'un déplacement relatif entre le panier et le support le long de l'axe longitudinal soit permis, et des moyens mécaniques de déplacement du panier par rapport au support d'un angle donné autour de l'axe longitudinal sont portés par la surface intérieure du passage et par la surface extérieure de l'arbre, lesdits moyens mécaniques de déplacement étant activés à chaque cycle, chaque cycle comprenant un déplacement relatif le long de l'axe longitudinal du panier et du support en écartement et en rapprochement.

Les moyens mécaniques de déplacement comportent par exemple :
◆ des suiveurs de cames portés par la surface intérieure du passage ou par l'arbre, et
◆ des cames portées par l'un parmi l'arbre et la surface intérieure du passage, qui ne porte pas les suiveurs de cames,
lesdites cames définissant par paire des chemins de cames destinés à guider les suiveurs de came, lesdits chemins de cames étant répartis :
◆ en des chemins guidant les suiveurs de cames lors d'un déplacement relatif en écartement, dits chemins de cames en écartement et
◆ en des chemins guidant les suiveurs de cames lors d'un déplacement relatif en rapprochement, dits chemins de cames en rapprochement.

Les moyens mécaniques peuvent comporter une première et une deuxième rangée de n cames chacune, n étant un entier supérieur à 1, disposées le long de l'axe longitudinal, les n cames de chaque rangée étant écartées les unes des autres d'un angle 360°/n autour de l'axe longitudinal, les cames de la première rangée étant décalées angulairement par rapport aux cames de la deuxième rangée d'un angle 180°/n.

Par exemple, les cames de la première rangée comportent au moins une face inclinée par rapport à l'axe longitudinal et les cames de la deuxième rangée comportent au moins une face inclinée par rapport à l'axe longitudinal dont l'inclinaison est opposée à celle des faces inclinées des cames de la première rangée, lesdites faces inclinées des cames des première et deuxième rangées étant sensiblement en regard.

Les cames de chaque première et deuxième rangée peuvent comporter des faces parallèles à l'axe longitudinal délimitant les faces inclinées de sorte que deux cames successives comportent deux faces parallèles assurant un guidage longitudinal des suiveurs de came.

Chaque chemin de came en écartement et chaque chemin de came en rapprochement comportent par exemple, dans cet ordre le long de l'axe longitudinal, une première portion de guidage longitudinal, au moins une portion de guidage en biais par rapport à l'axe longitudinal et une seconde portion de guidage longitudinal.

Un chemin de came en écartement et un chemin de came en rapprochement guidant le même suiveur de came peuvent avoir en commun au moins une portion de guidage longitudinal, les portions de guidage en biais du chemin de came en écartement et du chemin de came en rapprochement présentant des inclinaisons opposées.

Les suiveurs de came sont avantageusement formés par des galets faisant saillie radialement de la surface intérieure du passage et les cames sont portées par l'arbre.

Par exemple, le dispositif de stockage comporte six alvéoles, n étant égal à 6, de sorte que le panier pivote d'un angle de 60° à chaque cycle.

La présente invention a également pour objet un système de manutention comportant au moins un dispositif de stockage indexé en position selon l'invention et des moyens de déplacement relatif du panier et du support de sorte à leur appliquer des cycles d'écartement et rapprochement.

Par exemple, les moyens de déplacement sont destinés à saisir le panier au niveau de son axe et à lui appliquer un déplacement de montée et de descente le long de l'axe longitudinal et le panier comporte au moins un moyen apte à permettre sa préhension.

Les moyens de déplacement peuvent être formés par un grappin.

La présente invention a également pour objet une installation comportant une cellule de confinement et au moins un système de manutention selon l'invention. L'installation est par exemple destinée à la fabrication de combustible nucléaire.

### BRÈVE DESCRIPTION DES DESSINS

La présente invention sera mieux comprise à l'aide de la description qui va suivre et des dessins en annexe sur lesquels :
- la figure 1 est une vue en coupe longitudinale d'un exemple de réalisation d'un dispositif de stockage selon l'invention,
- la figure 2A est une vue de dessus du panier d'un dispositif de stockage de la figure 1,
- la figure 2B est une vue de dessous du panier de la figure 1,
- la figure 3A est une vue de côté de l'arbre d'indexation seul,
- la figure 3B est une vue en coupe transversale selon le plan A-A de l'arbre d'indexation de la figure 3A,
- la figure 4 est une vue en développé de l'arbre d'indexation du dispositif de la figure 3A.

### EXPOSÉ DÉTAILLÉ DE MODES DE RÉALISATION PARTICULIERS

Dans la description qui va suivre, le dispositif de stockage sera décrit en relation avec un étui de transport de boîtes remplies de matériaux destinés à la fabrication de combustible nucléaire.

Cependant, il sera compris qu'il s'agit d'un exemple de réalisation, et que ce dispositif de stockage peut être utilisé pour le stockage d'autres objets, que ce soit dans le domaine nucléaire ou un autre domaine.

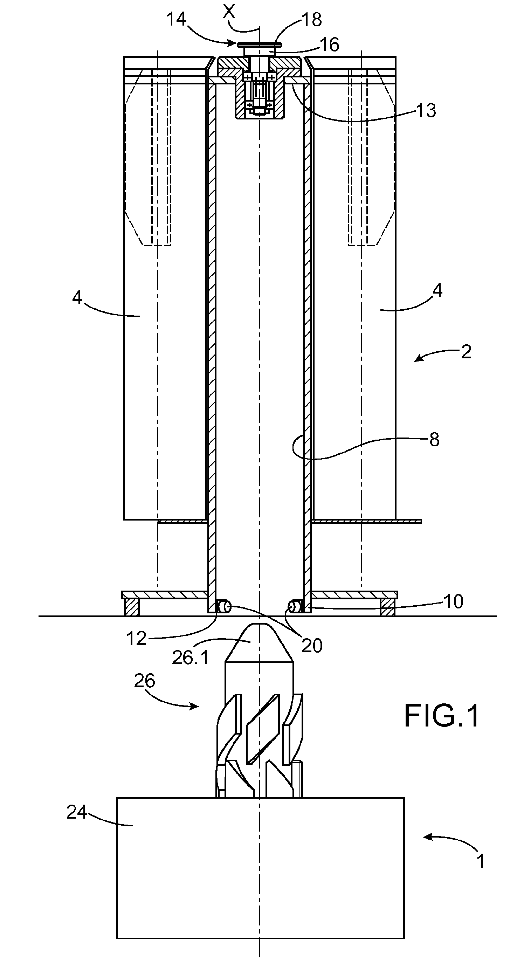

Sur la figure 1, on peut voir un exemple de réalisation d'un dispositif selon l'invention vu en coupe longitudinale. Le dispositif présente un axe longitudinal X destiné à être orienté verticalement.

Le dispositif de stockage comporte un support 1 et un panier 2. Sur la figure 1, le support 1 et le panier 2 sont dans une position écartée.

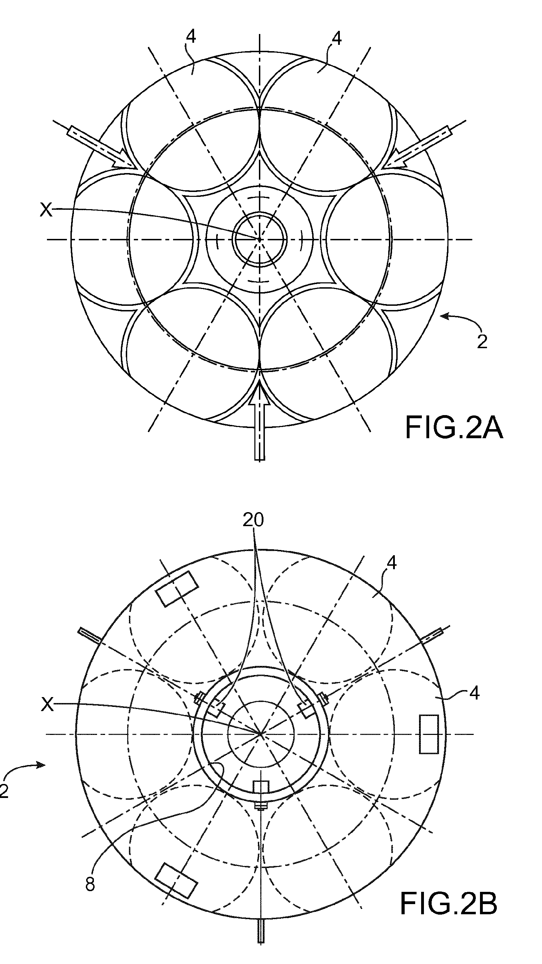

La figure 2A est une vue de dessus du panier 2 destiné à recevoir des étuis vides.

Le panier 2 a, dans l'exemple représenté, la forme d'un cylindre de révolution d'axe X, comportant six alvéoles 4 réparties angulairement de manière régulière autour de l'axe X. Un étui vide a la forme d'un tube fermé à l'une de ses extrémités longitudinales ; il présente donc une forme allongée. La forme des alvéoles est telle qu'elle permet de loger les étuis et les têtes d'étui.

Le nombre d'alvéoles n'est pas limitatif et peut être inférieur ou supérieur à six.

En outre, dans l'exemple représenté, les alvéoles ne comportent pas une paroi latérale fermée, mais celle-ci est ouverte au niveau de la périphérie extérieure du panier. Les parois des alvéoles sont telles qu'elles entourent suffisamment les étuis pour les maintenir.

Les alvéoles 4 ont une profondeur telle que celle-ci permet de loger les étuis vides. Dans le cas d'un panier pour stocker des têtes d'étui, il peut s'agir du même panier que celui utilisé pour les étuis, plusieurs têtes étant alors chargées dans chaque alvéole, ou alors d'un panier avec de alvéoles moins profondes, recevant chacune une seule tête d'étui.

Le panier 2 comporte un passage 8 d'axe X situé au centre des alvéoles. Le passage 8 débouche dans le fond inférieur 10 par une ouverture centrale 12.

Dans l'exemple représenté, l'extrémité supérieure 13 du passage 8 est obturée.

De manière avantageuse, le panier 2 comporte des moyens 14 destinés à permettre la manipulation du panier par un système extérieur, par exemple par des moyens de préhension externe, par exemple un grappin pour déplacer verticalement le panier 2. Dans l'exemple représenté, les moyens 14 sont formés par un disque fixé par une de ses faces sur l'extrémité supérieure 13 du passage 8 au moyen d'un axe 16 de diamètre inférieur à celui du disque de sorte que le disque présente un bord radial 18 en saillie apte à permettre sa saisie. Le grappin est par exemple fixé à un pont roulant permettant de le déplacer pour l'utiliser à autre endroit de l'installation.

L'ouverture inférieure 12 du passage 8 comporte trois galets 20 sur sa périphérie faisant saillie radialement vers l'intérieur du passage et disposés autour de l'axe X à 120° l'un de l'autre, comme cela est particulièrement visible sur la figure 2B.

Les galets 20 forment des suiveurs de came comme nous le verrons par la suite.

Le support 1 comporte un châssis 24 destiné à être disposé sensiblement horizontalement et un arbre d'indexation 26 d'axe X orienté perpendiculairement au châssis 24. L'arbre d'indexation 26 est destiné à être coulissé dans le passage 8.

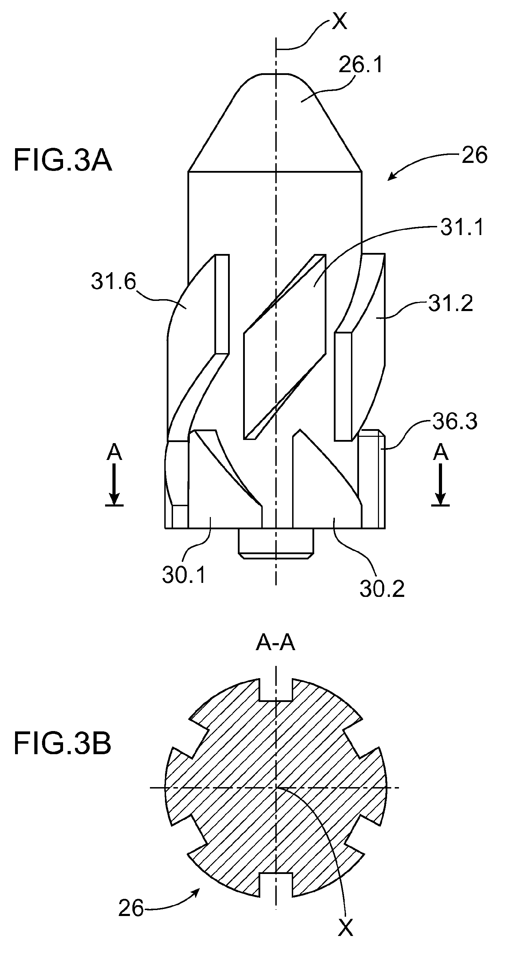

Sur la figure 3A, on peut voir représenté l'arbre d'indexation 26 seul ; celui-ci comporte une surface latérale portant des cames 30.1 à 30.6 et 31.1 à 31.6, en saillie et définissant des chemins de cames le long desquels les galets 20 sont destinés à coulisser.

Dans l'exemple représenté et de manière avantageuse, l'extrémité libre 26.1 de l'arbre d'indexation 26 comporte une forme effilée, sensiblement tronconique, facilitant son insertion dans le passage 8.

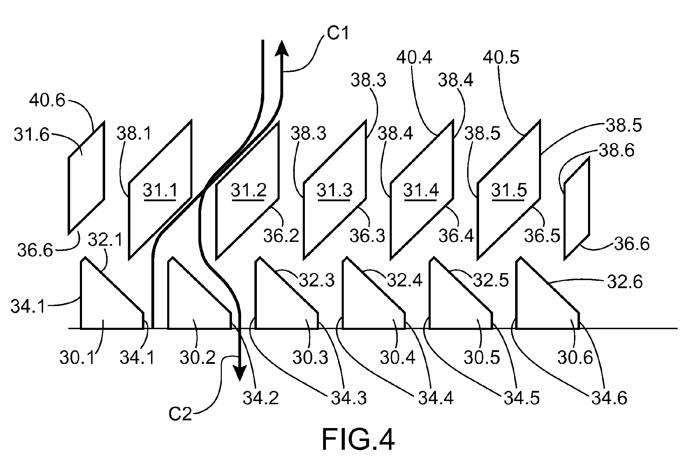

Nous allons maintenant décrire en détail un exemple de réalisation des cames et chemins de came portés par l'arbre d'indexation à l'aide de la figure 4 qui est une vue en développé de la surface latérale de l'arbre d'indexation.

Les cames 30.1 à 30.6 et 31.1 à 31.6 sont réparties en deux rangées R1, R2 le long de l'axe X et sont au nombre de six chacune. La numérotation des cames est croissante dans le sens antihoraire.

Les deux rangées comportent le même nombre de cames. Les cames 30.1 à 30.6, 31.1 à 31.6 de chaque rangée R1, R2 sont réparties angulairement de manière régulière autour de l'axe X. Les cames 30.1 à 30.6 de la rangée R1 sont décalées angulairement par rapport aux cames 31.1 à 31.6 de la rangée R2 d'un angle de 30°. Ainsi une came 30.1 se situe entre deux cames 31.1 à 31.6 en regardant dans la direction de la flèche F.

Sur la figure 3B, on peut voir une coupe de l'arbre d'indexation 26 le long du plan A-A. L'arbre d'indexation comporte six emplacements pour les galets définissant les positions angulaires différentes que peut prendre le panier 2.

Les cames 30.1 à 30.6 de la rangée R1 située du côté du châssis 24 comportent une face inclinée 32.1 à 32.6 par rapport à l'axe X, située du côté de l'extrémité libre 26.1 de l'arbre d'indexation 26. Dans l'exemple représenté, la face inclinée 32.1 à 32.6 est délimitée par deux faces 34.1 à 34.6 parallèles à l'axe X et les faces inclinées 32.1 à 32.6 forment un angle de 45° avec l'axe X.

Les cames 31.1 à 31.6 de la rangée R2 située du côté de l'extrémité libre 26.1 de l'arbre d'indexation comportent une face inclinée 36.1 à 36.6 par rapport à l'axe X située du côté du châssis 24 et d'inclinaison opposée à celle de la face inclinée 32.1 à 32.6. Dans l'exemple représenté, la face inclinée 36.1 à 36.6 est délimitée par deux faces 38.1 à 38.6 parallèles à l'axe X et les faces inclinées 36.1 à 36.6 forment un angle de 45° avec l'axe X.

Dans l'exemple représenté, les cames 31.1 à 31.6 ont la forme de parallélogramme non rectangle, et comportent donc une deuxième face inclinée 40.1 à 40.6 parallèle à la face inclinée 36.1 à 36.6 et située du côté de l'extrémité libre 26.1 de l'arbre d'indexation 26.

Les faces des cames délimitent des chemins de came en écartement C1 guidant les galets lors d'un écartement relatif du panier 2 et de l'arbre d'indexation 26 et des chemins de came en rapprochement C2 guidant les galets lors d'un rapprochement relatif du panier 2 et de l'arbre d'indexation 26 (figures 3A et 4).

Le fonctionnement du dispositif de stockage va maintenant être décrit.

Comme on peut le voir sur la figure 1, le panier 2 est monté sur le support de sorte que l'arbre d'indexation 26 soit disposé dans le passage 8, les galets 20 étant alors situés à proximité du châssis 24 du support, chaque galet 20 se situe entre deux cames 30.1 à 30.6.

Considérons un galet 20 situé initialement entre la came 30.1 et la came 30.2. Le galet 20 se trouve donc entre des faces verticales 34.1 et 34.2.

Lorsque l'on souhaite faire pivoter le panier 2 autour de son axe X, un grappin est abaissé pour saisir le disque 14 puis est relevé, provoquant le déplacement du panier 2 le long du passage 8 vers le haut. Le galet 20 se déplace alors dans le chemin en écartement C1, ainsi il glisse tout d'abord sensiblement verticalement entre deux faces verticales 34.1 et 34.2 des deux cames 30.1, 30.2 respectivement, puis latéralement et verticalement le long de la face inclinée 36.1 de la came 31.1 et enfin sensiblement verticalement entre deux faces verticales 38.1 et 38.2 des cames 31.1 et 31.2 respectivement.

Ensuite, le panier 2 est abaissé, le galet 20 glisse le long de la face inclinée 40.2 de la came 31.2, puis glisse entre les faces verticales 38.1 et 38.2 des cames 31.1 et 31.2 respectivement puis le long de la face inclinée 32.2 de la came 30.2, le panier 2 pivote alors dans le sens antihoraire par rapport à sa position. On constate que le galet 20 se situe désormais entre les faces verticales 34.2 et 34.3 des cames 30.2 et 30.3 respectivement, et non plus entre les cames 30.1 et 30.2. Il a donc subi une rotation de 60° autour de l'axe X. Par conséquent, le panier a tourné d'un angle de 60° dans le sens antihoraire autour de l'axe X.

Ainsi, l'arbre d'indexation 26 et les galets 20 forment des moyens d'indexation simples et robustes ne nécessitant aucun contrôle électronique. En outre, en comptant le nombre de déplacements du panier on peut enregistrer la position des alvéoles et associer une alvéole à un étui ou une tête d'étui de manière très simple.

Grâce à l'invention l'indexation des alvéoles du panier s'effectue de manière uniquement mécanique sans la mise en oeuvre de codeur et de moyens électroniques de traitement. Il présente donc une grande robustesse et ne nécessite pas de maintenance.

Dans l'exemple décrit les chemins C1 et C2 ont de portions communes, on pourrait envisager que les deux chemins n'est aucune portion commune, par exemple, les cames de la rangée R2 pourraient être telles que le galet 20 en phase de rapprochement chemine entre les faces 38.2 et 38.3 des galets 31.2 et 31.3 et non entre les faces 38.1 et 38.2 des galets 31.1 et 31.2.

Dans l'exemple décrit, la rotation du panier s'effectue par le déplacement du panier. Alternativement, il peut être envisagé de déplacer le support vers le bas par rapport au panier, la disposition des cames le long de l'axe X serait alors inversée par rapport à la disposition de la figure 3, ou encore de déplacer le panier et le support en éloignement et en rapprochement l'un de l'autre.

Un dispositif dans lequel les galets seraient portés par l'arbre 26 et les cames seraient portées par la surface intérieure du passage 8 ne sort pas du cadre de la présente invention, en particulier dans le cas d'un dispositif de grande taille.

En outre, il pourrait être prévu que le panier soit déplacé par un vérin ou tout autre système situé sous le panier ou latéralement et apte à déplacer verticalement le panier par rapport au support.

Il sera compris que le nombre de galets n'est pas limité à trois. La mise en oeuvre de trois galets présente l'avantage d'offrir un guidage uniforme du panier par rapport à l'arbre.

Par ailleurs, le profil des cames et leur nombre seront adaptés en fonction du nombre d'alvéoles du panier. Par exemple, dans le cas d'un panier à huit alvéoles, l'arbre d'indexation pourrait comporter deux rangées de huit cames. Cependant le nombre de cames n'augmente pas nécessairement avec le nombre d'alvéoles. En effet, on pourrait prévoir que plusieurs alvéoles soient chargées simultanément, par exemple deux; ainsi un panier à douze alvéoles ne nécessiterait que d'avoir six positions angulaires différentes comme le dispositif décrit ci-dessus.

L'utilisation du grappin pour déplacer le panier est particulièrement avantageuse car le grappin peut être utilisé à d'autres fins et donc être partagé ce qui permet de réduire le coût de réalisation de l'installation. Par exemple, dans le cas de paniers de stockage d'étuis vides et de têtes d'étuis ayant servi au transport de boîtes de matériaux destinés à la fabrication de combustibles nucléaires tels que de l'oxyde de plutonium, le grappin sert également à manipuler l'étui rempli en vue de son ouverture. Il peut également être utilisé pour déplacer le panier plein en vue de son évacuation.

Le dispositif de stockage selon l'invention peut donc être appliqué dans des domaines techniques où l'on souhaite collecter de manière simple des objets.

## Revendications

1. Dispositif de stockage comportant un support (1) et un panier (2) monté sur le support (1), le panier (2) comportant une pluralité d'alvéoles (4) réparties autour d'un axe longitudinal (X), le panier (2) comportant un passage central (8) d'axe longitudinal (X), le support comportant un arbre (26) d'axe longitudinal (X), l'arbre (26) étant logé dans le passage central (8) de sorte qu'un déplacement relatif entre le panier (2) et le support (1) le long de l'axe longitudinal (X) soit permis, et des moyens mécaniques de déplacement du panier par rapport au support d'un angle donné autour de l'axe longitudinal (X) **caractérisé en ce que** les moyens mécaniques de déplacement sont portés par la surface intérieure du passage central (8) et par la surface extérieure de l'arbre (26), lesdits moyens mécaniques de déplacement étant activés à chaque cycle, ledit cycle comprenant un déplacement relatif le long de l'axe longitudinal (X) du panier (2) et du support (1) en écartement et en rapprochement.

2. Dispositif de stockage selon la revendication 1, dans lequel les moyens mécaniques de déplacement comportent :
◆ des suiveurs de cames (20) portés par la surface intérieure du passage central (8) ou par l'arbre (26), et
◆ des cames (30.1 à 30.6, 31.1 à 31.6) portées par l'un parmi l'arbre (26) et la surface intérieure du passage central (8), qui ne porte pas les suiveurs de cames,
lesdites cames (30.1 à 30.6, 31.1 à 31.6) définissant par paire des chemins de cames (C1, C2) destinés à guider les suiveurs de came (20), lesdits chemins de cames (C1, C2) étant répartis :
◆ en des chemins guidant les suiveurs de cames lors d'un déplacement relatif en écartement, dits chemins de cames en écartement (C1) et
◆ en des chemins guidant les suiveurs de cames lors d'un déplacement relatif en rapprochement, dits chemins de cames en rapprochement (C2).

3. Dispositif de stockage selon la revendication 2, comportant une première (R1) et une deuxième (R2) rangées de n cames chacune (30.1 à 30.6, 31.1, à 31.6), n étant un entier supérieur à 1, disposées le long de l'axe longitudinal (X), les n cames (30.1 à 30.6, 31.1 à 31.6) de chaque rangée (R1, R2) étant écartées les unes des autres d'un angle 360°/n autour de l'axe longitudinal (X), les cames (30.1 à 30.6) de la première rangée (R1) étant décalées angulairement par rapport aux cames (31.1 à 31.6) de la deuxième rangée (R2) d'un angle 180°/n.

4. Dispositif de stockage selon la revendication 3, dans lequel les cames (30.1 à 30.6) de la première rangée (R1) comportent au moins une face inclinée (32.1 à 32.6) par rapport à l'axe longitudinal (X) et les cames (31.1 à 31.6) de la deuxième rangée (R2) comportent au moins une face inclinée (36.1, 36.2) par rapport à l'axe longitudinal (X) dont l'inclinaison est opposée à celle des faces inclinées (32.1 à 32.6) des cames (30.1 à 30.6) de la première rangée (R1), lesdites faces inclinées (32.1 à 32.6, 36.1 à 36.6) des cames (R1, R2) des première (R1) et deuxième (R2) rangées étant sensiblement en regard.

5. Dispositif de stockage selon la revendication 4, dans lequel les cames (30.1 à 30.6, 31.1 à 31.6) de chaque première (R1) et deuxième (R2) rangée comportent des faces parallèles (34.1 à 34.6, 38.1 à 38.6) à l'axe longitudinal (X) délimitant les faces inclinées (32.1 à 32.6, 36.1 à 36.6) de sorte que deux cames (30.1 à 30.6, 31.1 à 31.6) successives comportent deux faces parallèles assurant un guidage longitudinal des suiveurs de came.

6. Dispositif de stockage selon la revendication 5, dans lequel chaque chemin de came en écartement (C1) et chaque chemin de came en rapprochement (C2) comportent, dans cet ordre le long de l'axe longitudinal (X), une première portion de guidage longitudinal, au moins une portion de guidage en biais par rapport à l'axe longitudinal (X) et une seconde portion de guidage longitudinal.

7. Dispositif de stockage selon la revendication 6, dans lequel un chemin de came en écartement (C1) et un chemin de came en rapprochement (C2) guidant le même suiveur de came (20) ont en commun au moins une portion de guidage longitudinal, les portions de guidage en biais du chemin de came en écartement (C1) et du chemin de came en rapprochement (C2) présentant des inclinaisons opposées.

8. Dispositif de stockage selon l'une des revendications 2 à 7, dans lequel les suiveurs de came (20) sont formés par des galets faisant saillie radialement de la surface intérieure du passage (8) et les cames (30.1 à 30.6, 31.1 à 31.6) sont portées par l'arbre (26).

9. Dispositif de stockage selon l'une des revendications 3 à 7 comportant six alvéoles (4) et dans lequel n est égal à 6.

10. Système de manutention comportant au moins un dispositif de stockage selon l'une des revendications 1 à 9 et des moyens de déplacement relatif du panier (2) et du support (1) de sorte à leur appliquer des cycles d'écartement et rapprochement.

11. Système de manutention selon la revendication 10 dans lequel les moyens de déplacement sont destinés à saisir le panier (2) au niveau de son axe et à lui appliquer un déplacement de montée et de descente le long de l'axe longitudinal (X) et dans lequel le panier (2) comporte au moins un moyen (14) apte à permettre sa préhension.

12. Système de manutention selon la revendication précédente, dans lequel les moyens de déplacement sont formés par un grappin.

13. Installation comportant une cellule de confinement et au moins un système de manutention selon la revendication 12.

14. Installation selon la revendication 13, ladite installation étant adaptée à la fabrication de combustible nucléaire.

## Patentansprüche

1. Speichervorrichtung, umfassend einen Träger (1) und einen an dem Träger (1) montierten Korb (2), wobei der Korb (2) eine Mehrzahl von Zellen (4) umfasst, die um eine Längsachse (X) herum verteilt sind, wobei der Korb (2) einen zentralen Durchgang (8) mit der Längsachse (X) umfasst, wobei der Träger eine Welle (26) mit der Längsachse (X) umfasst, wobei die Welle (26) in den zentralen Durchgang (8) derart aufgenommen ist, dass eine Relativverlagerung zwischen dem Korb (2) und dem Träger (1) entlang der Längsachse (X) ermöglicht ist, sowie mechanische Mittel zur Verlagerung des Korbs relativ zum Träger um einen gegebenen Winkel um die Längsachse (X) herum, **dadurch gekennzeichnet, dass** die mechanischen Verlagerungsmittel von der Innenoberfläche des zentralen Durchgangs (8) und von der Außenoberfläche der Welle (26) getragen werden, wobei die mechanischen Verlagerungsmittel bei jedem Zyklus aktiviert werden, wobei der Zyklus eine Relativverlagerung des Korbs (2) und des Trägers (1) entlang der Längsachse (X) in einer Beabstandung und einer Annäherung umfasst.

2. Speichervorrichtung nach Anspruch 1, bei der die mechanischen Verlagerungsmittel umfassen:
• Nockenfolger (20), die von der Innenoberfläche des zentralen Durchgangs (8) oder von der Welle (26) getragen werden, und
• Nocken (30.1 bis 30.6, 31.1 bis 31.6), die von einem Element aus der Welle (26) und der Innenoberfläche des zentralen Durchgangs (8) getragen werden, das nicht die Nockenfolger trägt,
wobei die Nocken (30.1 bis 30.6, 31.1 bis 31.6) paarweise Nockenwege (C1, C2) definieren, die dazu ausgelegt sind, die Nockenfolger (20) zu führen, wobei die Nockenwege (C1, C2) aufgeteilt sind:
• in Wege, die die Nockenfolger während einer Relativverlagerung in einer Beabstandung führen, genannt Beabstandungs-Nockenwege (C1), und
• Wege, die die Nockenfolger während einer Relativverlagerung in einer Annäherung führen, genannt Annäherungs-Nockenwege (C2).

3. Speichervorrichtung nach Anspruch 2, umfassend eine erste (R1) und eine zweite (R2) Reihe von jeweils n Nocken (30.1 bis 30.6, 31.1 bis 31.6), wobei n eine ganze Zahl größer als 1 ist, die entlang der Längsachse (X) angeordnet sind, wobei die n Nocken (30.1 bis 30.6, 31.1 bis 31.6) jeder Reihe (R1, R2) voneinander um einen Winkel 360°/n um die Längsachse (X) herum beabstandet sind, wobei die Nocken (30.1 bis 30.6) der ersten Reihe (R1) in Winkelrichtung bezüglich der Nocken (31.1 bis 31.6) der zweiten Reihe (R2) um einen Winkel 180°/n versetzt sind.

4. Speichervorrichtung nach Anspruch 3, bei der die Nocken (30.1 bis 30.6) der ersten Reihe (R1) wenigstens eine bezüglich der Längsachse (X) geneigte Fläche (32.1 bis 32.6) umfassen, und die Nocken (31.1 bis 31.6) der zweiten Reihe (R2) wenigstens eine bezüglich der Längsachse (X) geneigte Fläche (36.1 bis 36.2) umfassen, deren Neigung entgegengesetzt ist zu jener der geneigten Flächen (32.1 bis 32.6) der Nocken (30.1 bis 30.6) der ersten Reihe (R1), wobei die geneigten Flächen (32.1 bis 32.6, 36.1 bis 36.6) der Nocken (R1, R2) der ersten (R1) und der zweiten (R2) Reihe im Wesentlichen gegenüber liegen.

5. Speichervorrichtung nach Anspruch 4, bei der die Nocken (30.1 bis 30.6, 31.1 bis 31.6) jeder ersten (R1) und zweiten (R2) Reihe zur Längsachse (X) parallele Flächen (34.1 bis 34.6, 38.1 bis 38.6) umfassen, die die geneigten Flächen (32.1 bis 32.6, 36.1 bis 36.6) derart begrenzen, dass zwei aufeinanderfolgende Nocken (30.1 bis 30.6, 31.1 bis 31.6) zwei parallele Flächen umfassen, die eine Längsführung der Nockenfolger gewährleisten.

6. Speichervorrichtung nach Anspruch 5, bei der jeder Beabstandungs-Nockenweg (C1) und jeder Annäherungs-Nockenweg (C2) in dieser Reihenfolge entlang der Längsachse (X) einen ersten Bereich zur Längsführung, wenigstens einen Bereich zur Schrägführung bezüglich der Längsachse (X) sowie einen zweiten Bereich zur Längsführung umfassen.

7. Speichervorrichtung nach Anspruch 6, bei der ein Beabstandungs-Nockenweg (C1) und ein Annäherungs-Nockenweg (C2), die den gleichen Nockenfolger (20) führen, wenigstens einen Bereich zur Längsführung gemeinsam haben, wobei die Bereiche zur Schrägführung des Beabstandungs-Nockenwegs (C1) und des Annäherungs-Nockenwegs (C2) entgegengesetzte Neigungen aufweisen.

8. Speichervorrichtung nach einem der Ansprüche 2 bis 7, bei der die Nockenfolger (20) durch Rollen gebildet sind, die radial aus der Innenoberfläche des Durchgangs (8) vorstehen, und die Nocken (30.1 bis 30.6, 31.1 bis 31.6) von der Welle (26) getragen werden.

9. Speichervorrichtung nach einem der Ansprüche 3 bis 7, die sechs Zellen (4) umfasst und bei der n gleich 6 ist.

10. Handhabungssystem, umfassend wenigstens eine Speichervorrichtung nach einem der Ansprüche 1 bis 9 sowie Mittel zur Relativverlagerung des Korbs (2) und des Trägers (1) derart, dass ihnen Beabstandungs- und Annäherungszyklen auferlegt werden.

11. Handhabungssystem nach Anspruch 10, bei dem die Verlagerungsmittel dazu ausgelegt sind, den Korb (2) im Bereich seiner Achse zu ergreifen und ihm eine Steig- und Sinkverlagerung entlang der Längsachse (X) aufzuerlegen, und wobei der Korb (2) wenigstens eine Einrichtung (14) umfasst, die es ermöglicht, ihn zu ergreifen.

12. Handhabungssystem nach dem vorhergehenden Anspruch, bei dem die Verlagerungsmittel durch einen Greifer gebildet sind.

13. Anlage, umfassend eine Confinement-Zelle und wenigstens ein Handhabungssystem nach Anspruch 12.

14. Anlage nach Anspruch 13, wobei die Anlage zur Herstellung von Kernbrennstoff ausgelegt ist.

## Claims

1. Storage device comprising a support (1) and a basket (2) installed on the support (1), the basket (2) comprising a plurality of compartments (4) distributed around a longitudinal axis (X), the basket (2) comprising a central passage (8) with a longitudinal axis (X), the support comprising a shaft (26) with a longitudinal axis (X), the shaft (26) being housed in the passage (8) such that relative displacement is possible between the basket (2) and the support (1) along the longitudinal axis (X), and mechanical means for displacement of the basket relative to the support by a given angle about the longitudinal axis (X) **characterized in that** the mechanical means are supported by the internal surface of the passage (8) and the external surface of the shaft (26), said mechanical displacement means being actuated in each cycle, said cycle comprising a relative separation displacement along the longitudinal axis (X) of the basket (2) and the support (1) and a relative approach displacement along the longitudinal axis (X) of the basket (2) and the support (1).

2. Storage device according to claim 1, in which the mechanical displacement means comprise:
◆ cam followers (20) supported by the internal surface of the passage (8) or by the shaft (26), and
◆ cams (30.1 to 30.6, 31.1 to 31.6) supported by either the shaft (26) or the inside surface of the passage (8), that does not support cam followers,
said cams (30.1 to 30.6, 31.1 to 31.6) defining pairs of cam paths (C1, C2) that will guide the cam followers (20), said cam paths (C1, C2) being distributed:
◆ in paths guiding cam followers during a relative separation displacement, called separation cam paths (C1) and
◆ in paths guiding cam followers during a relative approach displacement, called approach cam paths (C2).

3. Storage device according to claim 2, comprising a first row (R1) and a second row (R2) each containing n cams (30.1 to 30.6, 31.1, to 31.6), n being an integer equal to more than 1, arranged along the longitudinal axis (X), the n cams (30.1 to 30.6, 31.1 to 31.6) of each row (R1, R2) being separated from each other by an angle 360°/n about the longitudinal axis, the cams (30.1 to 30.6) in the first row (R1) being offset by an angle equal to 180°/n from the cams (31.1, to 31.6) in the second row (R2).

4. Storage device according to claim 3, in which the cams (30.1 to 30.6) in the first row (R1) comprise at least one face (32.1 to 32.6) inclined from the longitudinal axis (X) and the cams (31.1 to 31.6) in the second row (R2) comprise at least one face (36.1, 36.2) inclined from the longitudinal axis (X) at an inclination opposite the inclination of the inclined faces (32.1 to 32.6) of the cams (30.1 to 30.6) in the first row (R1), said inclined faces (32.1 to 32.6, 36.1 to 36.6) of the cams (R1, R2) in the first row (R1) and second row (R2) being approximately facing each other.

5. Storage device according to claim 4, in which the cams (30.1 to 30.6, 31.1 to 31.6) in each first row (R1) and second row (R2) comprise faces (34.1 to 34.6, 38.1 to 38.6) parallel to the longitudinal axis (X) delimiting the inclined faces (32.1 to 32.6, 36.1 to 36.6) such that two successive cams (30.1 to 30.6, 31.1 to 31.6) comprise two parallel faces providing longitudinal guidance of cam followers.

6. Storage device according to claim 5, in which each separation cam path (C1) and each approach cam path (C2) comprise a first longitudinal guidance portion, at least one skew guidance portion from the longitudinal axis (X) and a second longitudinal guidance portion, in sequence along the longitudinal axis (X).

7. Storage device according to claim 6, in which a separation cam path (C1) and an approach cam path (C2) guiding the same cam follower (20) have at least one longitudinal guidance portion in common, the skew guidance portions of the separation cam path (C1) and of the approach cam path (C2) having opposite inclinations.

8. Storage device according to one of claims 2 to 7, in which the cam followers (20) are composed of rollers that project radially from the inside surface of the passage (8) and the cams (30.1 to 30.6, 31.1 to 31.6) are supported by the shaft (26).

9. Storage device according to one of claims 3 to 7 comprising six compartments (4) and in which n is equal to 6.

10. Handling system comprising at least one storage device according to one of claims 1 to 9 and means of controlling the relative displacement of the basket (2) and the support (1) such that separation and approach cycles can be applied to them.

11. Handling system according to claim 10 in which displacement means will be used to grip the basket (2) at its axis and apply an up and down movement to it along the longitudinal axis (X), and the basket (2) comprises at least one means (14) for gripping it.

12. Handling system according to the previous claim, in which the displacement means consist of a grab.

13. Installation comprising a confinement cell and at least one handling system according to claim 12.

14. Installation according to claim 13, said installation being adapted to the fabrication of nuclear fuel.
